# EUROPEAN PATENT APPLICATION

(11) **EP 4 793 253 A1**
(43) Date of publication of application: **19.08.2026**
(21) Application number: 25779446.1
(22) Date of filing: 03.03.2025
(51) Int. Cl.: C04B 28/02, B28B 11/24, B28C 7/04, C04B 22/06, C04B 22/08, C04B 40/02

(54) **HYDRAULIC COMPOSITION AND METHOD FOR PRODUCING HARDENED BODY OF HYDRAULIC COMPOSITION**

(30) Priority: 25.03.2024 JP 2024047763
(71) Applicant: Taiheiyo Cement Corporation, Bunkyo-ku Tokyo 112-8503 (JP)
(72) Inventor: TABA, Hiromichi, Tokyo 112-8503 (JP); HAYAKAWA, Takayuki, Tokyo 112-8503 (JP); KUROKAWA, Daisuke, Tokyo 112-8503 (JP)
(74) Representative: Isarpatent
(86) International application number: PCT/JP2025/007457
(87) International publication number: WO 2025/204522

(57) **Abstract**

Provided is a hydraulic composition and a method of manufacturing a hardened body of the hydraulic composition each having the following features: in the manufacture of a hardened body such as concrete to be subjected to steam curing, manufacturing efficiency can be improved by shortening the pre-curing time of the composition, and even when the pre-curing time is shortened, a hardened body such as concrete excellent in strength can be manufactured; and the amount of carbon dioxide emission can be reduced by using a carbonated cement hydrate obtained by fixing carbon dioxide in part of cement or a cement hydrate in raw materials for the composition.

A hydraulic composition, comprising: cement; a carbonated cement hydrate; aggregate; and water, wherein a ratio of the carbonated cement hydrate in 100 mass% of a total of the cement and the carbonated cement hydrate is from 1 mass% to 50 mass%, and wherein an amount of the water is from 30 parts by mass to 60 parts by mass with respect to 100 parts by mass of the total of the cement and the carbonated cement hydrate.

## Description

### Technical Field

The present invention relates to a hydraulic composition and a method of manufacturing a hardened body of a hydraulic composition.

### Background Art

Steam curing has been typically performed for improving the productivity of the manufacture of a concrete product. However, concrete subjected to the steam curing tends to be reduced in strength (in particular, long-term strength) and durability as compared to concrete subjected to typical curing, and the tendency appears more strongly as a curing time before the steam curing (hereinafter also referred to as "pre-curing time") becomes shorter.

As a method by which the manufacturing time of concrete can be shortened, in Patent Literature 1, there is a description of a method of manufacturing a segment including: pouring high-fluidity concrete into a mold; hardening the high-fluidity concrete until the concrete becomes hard enough to be capable of being subjected to surface finish; then removing the mold; and subjecting the concrete to surface finish, the method being characterized in that a hardening accelerator is added to the high-fluidity concrete to accelerate the hardening of the high-fluidity concrete.

In Patent Literature 2, there is a description of acid-resistant concrete characterized in that the concrete is blended with water, an industrial by-product, an alkali stimulating material, an expanding material, fine aggregate, coarse aggregate, and a high-range water-reducing agent, and is manufactured by compacting the materials through centrifugal molding. In the literature, there is a description that when the centrifugal molding is performed, the steam curing time (pre-curing time) of the acid-resistant concrete can be shortened as compared to vibration molding.

### Citation List

### Patent Literature

[PTL 1] JP 2007-69366 A
[PTL 2] WO 2019/172349 A1

### Summary of Invention

### Technical Problem

Measures for improving the strength (in particular, long-term strength) and durability of concrete are, for example, the lengthening of the pre-curing time thereof and the performance of wet curing through water sprinkling after the steam curing thereof.

However, when the pre-curing time is lengthened, there is a problem in that the production efficiency of the concrete deteriorates because the timing at which the concrete is removed from a mold is delayed. The performance of the wet curing causes a problem in that color unevenness occurs on the surface of the product and hence the appearance thereof deteriorates.

An object of the present invention is to provide a hydraulic composition and a method of manufacturing a hardened body of the hydraulic composition each having the following features: in the manufacture of a hardened body such as concrete to be subjected to steam curing, manufacturing efficiency can be improved by shortening the pre-curing time of the composition, and even when the pre-curing time is shortened, a hardened body such as concrete excellent in strength can be manufactured; and the amount of carbon dioxide emission can be reduced by using a carbonated cement hydrate obtained by fixing carbon dioxide in part of cement or a cement hydrate in raw materials for the composition.

### Solution to Problem

The inventors of the present invention have made extensive investigations with a view to solving the above-mentioned problems, and as a result, have found that the above-mentioned object can be achieved by a hydraulic composition, which includes cement, a carbonated cement hydrate, aggregate, and water, in which the ratio of the carbonated cement hydrate in 100 mass% of the total of the cement and the carbonated cement hydrate is from 1 mass% to 50 mass%, and in which the amount of the water is from 30 parts by mass to 60 parts by mass with respect to 100 parts by mass of the total of the cement and the carbonated cement hydrate. Thus, the inventors have completed the present invention.

That is, the present invention provides the following items [1] to [7].
[1] A hydraulic composition, including: cement; a carbonated cement hydrate; aggregate; and water, wherein a ratio of the carbonated cement hydrate in 100 mass% of a total of the cement and the carbonated cement hydrate is from 1 mass% to 50 mass%, and wherein an amount of the water is from 30 parts by mass to 60 parts by mass with respect to 100 parts by mass of the total of the cement and the carbonated cement hydrate.
[2] The hydraulic composition according to the above-mentioned item [1], wherein the hydraulic composition includes fine aggregate and coarse aggregate as the aggregate, and has a sand percentage of from 35% to 65%.
[3] A method of manufacturing a hardened body of a hydraulic composition for manufacturing a hardened body of the hydraulic composition of the above-mentioned item [1] or [2], the method including: a cement hydrate slurry preparation step of mixing at least one of first cement or a cement hydrate, and first water to provide a cement hydrate slurry; a carbonation step of supplying a carbon dioxide gas into the cement hydrate slurry to provide a carbonated cement hydrate-containing product; a mixing step of mixing the carbonated cement hydrate-containing product, second cement, second water, and the aggregate to provide the hydraulic composition that is unhardened; a molding step of pouring the hydraulic composition that is unhardened into a mold to provide an unhardened molded body; a pre-curing step of subjecting the unhardened molded body to pre-curing under a temperature atmosphere at from 10°C to 40°C for from 0.1 hour to 5 hours; a steam curing step of subjecting the molded body after the pre-curing to steam curing to provide a hardened molded body; and a demolding step of removing the hardened molded body from the mold to provide the hardened body of the hydraulic composition.
[4] The method of manufacturing a hardened body of a hydraulic composition according to the above-mentioned item [3], further including, as a step provided between the carbonation step and the mixing step, a moisture adjustment step of adjusting a ratio of moisture in the carbonated cement hydrate-containing product.
[5] The method of manufacturing a hardened body of a hydraulic composition according to the above-mentioned item [3] or [4], wherein a ratio of water in the carbonated cement hydrate-containing product in 100 mass% of a total of the water in the carbonated cement hydrate-containing product and the second water is from 0 mass% to 95 mass%.
[6] The method of manufacturing a hardened body of a hydraulic composition according to any one of the above-mentioned items [3] to [5], wherein in the cement hydrate slurry preparation step, a mass ratio (the first water/at least one of the first cement or the cement hydrate) of the first water to at least one of the first cement or the cement hydrate is from 1.0 to 5.0.
[7] The method of manufacturing a hardened body of a hydraulic composition according to any one of the above-mentioned items [3] to [6], wherein in the steam curing step, the steam curing is performed under a temperature atmosphere at from 40°C to 80°C for 3 hours or more.

### Advantageous Effects of Invention

According to the hydraulic composition and the method of manufacturing a hardened body of the hydraulic composition of the present invention, in the manufacture of a hardened body such as concrete to be subjected to steam curing, manufacturing efficiency can be improved by shortening the pre-curing time of the composition, and even when the pre-curing time is shortened, a hardened body such as concrete excellent in strength can be manufactured.

The amount of carbon dioxide emission can be reduced by using a carbonated cement hydrate obtained by fixing carbon dioxide in part of raw materials for the composition.

### Brief Description of Drawings

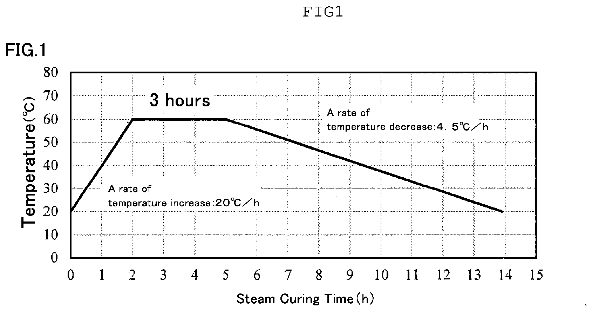

FIG. 1 is a graph showing a temperature history in each of Examples and Comparative Examples of the present invention.

### Description of Embodiments

A hydraulic composition of the present invention is a hydraulic composition including cement, a carbonated cement hydrate, aggregate, and water, in which the ratio of the carbonated cement hydrate in 100 mass% of the total of the cement and the carbonated cement hydrate is from 1 mass% to 50 mass%, and in which the amount of the water is from 30 parts by mass to 60 parts by mass with respect to 100 parts by mass of the total of the cement and the carbonated cement hydrate. The composition is described in detail below.

Examples of the cement include: various Portland cements, such as ordinary Portland cement, high-early-strength Portland cement, moderate-heat Portland cement, low-heat Portland cement, and sulfate-resistant Portland cement; mixed cements, such as blast furnace cement, fly ash cement, and silica cement; alumina cement; and Ecocement. Those cements may be used alone or in combination thereof.

The carbonated cement hydrate is obtained by carbonating cement or a cement hydrate. The term "carbonation" as used herein refers to the absorption and fixation of carbon dioxide.

Hardened bodies of cement compositions containing cement hydrates, such as ready-mixed concrete sludge, an end material of lightweight aerated concrete, and waste concrete, may each be used as the above-mentioned cement hydrate. The above-mentioned cement hydrate is as powdery as the cement.

The carbonated cement hydrate includes, for example, calcium silicate hydrate (CaO-SiO₂-H₂O), calcium hydroxide (Ca (OH) ₂), ettringite (3CaO·Al₂O₃·3CaSO₄·32H₂O), calcium aluminate hydrate (3Ca·Al₂O₃·6H₂O), and monosulfate hydrate (3CaO·Al₂O₃·CaSO₄·12H₂O).

The carbonated cement hydrate may be obtained by, for example, a cement hydrate slurry preparation step and a carbonation step to be described later.

The hydraulic composition of the present invention may include a cement hydrate that remains without being carbonated.

The hydraulic composition of the present invention can reduce the amount of carbon dioxide emission because the composition uses, as part of its raw materials, the carbonated cement hydrate obtained by fixing carbon dioxide in the cement or the cement hydrate.

The ratio of the carbonated cement hydrate in 100 mass% of the total of the cement and the carbonated cement hydrate is from 1 mass% to 50 mass%, preferably from 5 mass% to 45 mass%, more preferably from 8 mass% to 43 mass%, still more preferably from 12 mass% to 40 mass%, particularly preferably from 20 mass% to 37 mass%. When the above-mentioned ratio is 1 mass% or less, the strength developability of the hydraulic composition (particularly in the case where its pre-curing time is shortened in its curing) reduces. In addition, the reduction amount of the amount of carbon dioxide emission reduces. When the above-mentioned ratio is more than 50 mass%, the strength (e.g., compressive strength) of a hardened body of the hydraulic composition reduces, and the viscosity of the hydraulic composition before its hardening increases.

The aggregate is, for example, fine aggregate alone or a combination of the fine aggregate and coarse aggregate. Natural aggregate, artificial aggregate, and recycled aggregate may each be used.

The fine aggregate is not particularly limited, and examples thereof include river sand, mountain sand, land sand, sea sand, crushed sand, silica sand, limestone aggregate, slag fine aggregate, lightweight fine aggregate, clinker fine aggregate, and CCU fine aggregate (fine aggregate obtained by fixing carbon dioxide in one or more kinds selected from recycled aggregate, waste concrete, blast furnace slag, and steel slag). Those materials may be used alone or in combination thereof.

The coarse aggregate is not particularly limited, and examples thereof include river gravel, mountain gravel, land gravel, sea gravel, crushed stone, limestone aggregate, slag coarse aggregate, lightweight coarse aggregate, clinker coarse aggregate, and CCU coarse aggregate (coarse aggregate obtained by fixing carbon dioxide in one or more kinds selected from recycled aggregate, waste concrete, blast furnace slag, and steel slag). Those materials may be used alone or in combination thereof.

When the hydraulic composition includes fine aggregate and coarse aggregate as the aggregate, its sand percentage (s/a) is preferably from 35% to 65%, more preferably from 40% to 60%, particularly preferably from 43% to 50%. When the sand percentage falls within the above-mentioned numerical ranges, the workability and ease of molding of mortar or concrete are improved.

The sand percentage is the ratio of the volume of the fine aggregate in the total volume of the fine aggregate and the coarse aggregate.

The content of the aggregate in the hydraulic composition (when both the fine aggregate and the coarse aggregate are incorporated, their total amount) is preferably from 200 parts by mass to 750 parts by mass, more preferably from 300 parts by mass to 650 parts by mass with respect to 100 parts by mass of the total of the cement and the carbonated cement hydrate. When the above-mentioned content falls within the above-mentioned numerical ranges, the strength of the hardened body of the hydraulic composition is improved. In addition, the shrinkage ratio of the hardened body reduces.

The water is not particularly limited, and examples thereof include tap water, industrial water, and sludge water.

The amount of the above-mentioned water is from 30 parts by mass to 60 parts by mass, preferably from 35 parts by mass to 55 parts by mass, particularly preferably from 40 parts by mass to 52 parts by mass with respect to 100 parts by mass of the total of the cement and the carbonated cement hydrate. When the above-mentioned amount is less than 30 parts by mass, the fluidity of the hydraulic composition before its hardening reduces, and hence workability reduces. When the above-mentioned amount is more than 60 parts by mass, the strength of the hardened body of the hydraulic composition reduces.

The hydraulic composition of the present invention may include any one of, for example, cement dispersing agents, such as a water-reducing agent, an AE water-reducing agent, a high-range water-reducing agent, and a high-range AE water-reducing agent, various admixtures such as an AE agent, and various admixtures, such as silica fumes, fly ash, and blast furnace slag fine powder, as required to the extent that the object of the present invention is not impaired.

When a carbonated slurry (mixture of a carbonated cement hydrate and water) is used as a raw material, the water in the carbonated slurry is part of the water in the hydraulic composition.

When the carbonated slurry is used as a raw material, the ratio of the carbonated slurry-derived water in the total amount (100 mass%) of the water in the hydraulic composition is preferably from 55 mass% to 95 mass%, more preferably from 58 mass% to 90 mass%, still more preferably from 60 mass% to 80 mass%, particularly preferably from 65 mass% to 70 mass%. When the above-mentioned ratio is 55 mass% or more, the strength of the hardened body of the hydraulic composition can be made larger. When the above-mentioned ratio is 95 mass% or less, the amount of air in a cement composition increases, and hence the fluidity of the hydraulic composition before its hardening is improved.

The hydraulic composition of the present invention is suitable for a method in which steam curing is performed at the time of the manufacture of a hardened body because the hydraulic composition is excellent in strength developability even when its pre-curing time is shortened in a manufacturing process for the hardened body of the hydraulic composition.

A method of manufacturing the hardened body of the hydraulic composition of the present invention is, for example, a method including: (A) a cement hydrate slurry preparation step of mixing at least one of first cement or a cement hydrate, and first water to provide a cement hydrate slurry; (B) a carbonation step of supplying a carbon dioxide gas into the cement hydrate slurry to provide a carbonated cement hydrate-containing product; (C) a mixing step of mixing the carbonated cement hydrate-containing product, second cement, second water, and the aggregate to provide the above-mentioned hydraulic composition that is unhardened; (D) a molding step of pouring the hydraulic composition that is unhardened into a mold to provide an unhardened molded body; (E) a pre-curing step of subjecting the unhardened molded body to pre-curing under a temperature atmosphere at from 10°C to 40°C for from 0.1 hour to 5 hours; (F) a steam curing step of subjecting the molded body after the pre-curing to steam curing to provide a hardened molded body; and (G) a demolding step of removing the hardened molded body from the mold to provide the hardened body of the hydraulic composition.

Each step is described in detail below.

### [Step (A): Cement Hydrate Slurry Preparation Step]

The step (A) is a step of mixing at least one of the first cement or the cement hydrate, and the first water to provide the cement hydrate slurry.

The first cement, the cement hydrate, and the first water are not particularly limited, and the same materials as the cement, the cement hydrate, and the water in the above-mentioned hydraulic composition may be used.

The mass ratio (water-solid content ratio: the first water/at least one of the first cement or the cement hydrate) of the first water to at least one of the first cement or the cement hydrate in the cement hydrate slurry is preferably from 1.0 to 5.0, more preferably from 1.5 to 4.5, particularly preferably from 2.5 to 3.5. When the above-mentioned ratio is 1.0 or more, the fluidity of the cement hydrate slurry is improved, and hence in the carbonation step to be described later, the carbon dioxide gas can be supplied into the cement hydrate slurry more easily and more homogeneously. When the above-mentioned ratio is 5.0 or less, the carbonation of the first cement or the cement hydrate in the cement hydrate slurry can be further accelerated.

A method of mixing at least one of the first cement or the cement hydrate, and the first water is not particularly limited, and for example, the following method may be adopted: the first water is loaded into a stirring tank or the like; and then at least one of the first cement or the cement hydrate is loaded thereinto. Alternatively, the following method may be adopted: the first water and at least one of the first cement or the cement hydrate are simultaneously loaded into the stirring tank or the like, and are then mixed.

### [Step (B): Carbonation Step]

The step (B) is a step of supplying the carbon dioxide gas into the cement hydrate slurry obtained in the cement hydrate slurry preparation step to provide the carbonated cement hydrate-containing product.

The term "carbonated cement hydrate-containing product" as used herein includes: (i) a slurry (also referred to as "carbonated slurry") obtained by suspending the particles of a carbonated cement hydrate in water; (ii) a product that contains the carbonated cement hydrate and the water, and is free of fluidity; and (iii) a powdery carbonated cement hydrate obtained by removing moisture through a moisture adjustment step to be described later.

The carbon dioxide gas is preferably supplied while the cement hydrate slurry is stirred from the following viewpoint: the carbon dioxide gas can be homogeneously supplied into the cement hydrate slurry, and hence a time period required for carbonation treatment is shortened. Specifically, there is given, for example, a method including: arranging carbon dioxide gas supply means for supplying the carbon dioxide gas in a stirring tank for storing and stirring the cement hydrate slurry; and supplying the carbon dioxide gas while stirring the cement hydrate slurry in the stirring tank.

The carbon dioxide gas is supplied until the pH of the cement hydrate slurry falls within the numerical range of preferably 9.0 or less, more preferably from 5.0 to 8.0, still more preferably from 5.5 to 7.5, particularly preferably from 6.0 to 6.8. When the carbon dioxide gas is supplied until the above-mentioned pH becomes 9.0 or less, the cement in the cement hydrate slurry is sufficiently carbonated, and hence the cement hydrate slurry containing a carbonated cement hydrate can be prepared.

The supply time of the carbon dioxide gas required for sufficiently carbonating the cement in the cement hydrate slurry varies depending on, for example, the mass ratio of the first water to at least one of the first cement or the cement hydrate, the carbon dioxide gas concentration of a gas containing the carbon dioxide gas, and the amount of the carbon dioxide gas to be supplied per unit time. Accordingly, the timing at which the supply of the carbon dioxide gas is ended is preferably determined on the basis of the actually measured value of the pH of the cement hydrate slurry.

A gas formed only of the carbon dioxide gas may be supplied as the carbon dioxide gas to the cement hydrate slurry, but a gas containing the carbon dioxide gas may be supplied thereto from the viewpoint of easy availability or the like.

The ratio of the carbon dioxide gas in the gas containing the carbon dioxide gas is preferably 5 vol% or more, more preferably 20 vol% or more, still more preferably 50 vol% or more, still more preferably 80 vol% or more, particularly preferably 90 vol% or more. When the above-mentioned ratio is 5 vol% or more, a time period required for obtaining the cement hydrate slurry, which is obtained by sufficiently carbonating the cement, can be shortened.

Examples of the gas containing the carbon dioxide gas include: an exhaust gas generated in a cement manufacturing process (carbon dioxide gas concentration: about 20 vol%); an exhaust gas generated in an steelmaking process (carbon dioxide gas concentration: about 20 vol%); an exhaust gas generated in a thermal power generation process (carbon dioxide gas concentration: about 10 vol%); and a separated and recovered gas from these exhaust gases (carbon dioxide gas concentration: about 100 vol%).

After the preparation of the carbonated cement hydrate-containing product, when the carbonated cement hydrate-containing product (e.g., a carbonated slurry) is stored in a storage tank for storing the carbonated cement hydrate-containing product once, and the mixing step (to be described later) is performed, the carbonated cement hydrate-containing product may be appropriately transferred to a mixing tank for performing the mixing.

### [Step (H): Moisture Adjustment Step]

A step (H) is a step optionally provided between the carbonation step and the mixing step, and is a step of adjusting the ratio of moisture in the carbonated cement hydrate-containing product.

A method of adjusting the ratio of the moisture in the carbonated cement hydrate-containing product (typically, a carbonated slurry) is, for example, a method including removing the moisture with solid-liquid separation means, such as a sedimentation separator, a vacuum dehydrator, or a pressure dehydrator, a method including heating the carbonated cement hydrate-containing product to evaporate the moisture, or a method including adding and mixing water into the carbonated cement hydrate-containing product for the purpose of increasing the ratio of the moisture described above.

The carbonated cement hydrate-containing product (typically, the carbonated slurry) may be dried by using any one of methods, such as natural drying, hot-air drying, vacuum drying, cooling and drying, infrared drying, freeze drying, and contact drying, to provide powder formed only of the carbonated cement hydrate.

### [Step (C): Mixing Step]

The step (C) is a step of mixing the carbonated cement hydrate-containing product obtained in the carbonation step or the moisture adjustment step to be optionally added, the second cement, the second water, and the aggregate to provide the hydraulic composition that is unhardened. When the hydraulic composition includes various admixtures and a mixture material, the various admixtures and the mixture material are typically mixed in this step.

The second cement and the second water are not particularly limited, and the same materials as the cement and the water in the above-mentioned hydraulic composition may be used.

A method of mixing the carbonated cement hydrate-containing product, the second cement, the second water, and the aggregate is not particularly limited, and for example, the following method may be adopted: the carbonated cement hydrate-containing product is loaded into a mixer; and then the raw materials except the carbonated cement hydrate-containing product are separately loaded and mixed into the product. Alternatively, the raw materials may be simultaneously loaded into the mixer and mixed.

The amounts of the respective raw materials only need to be appropriately determined so that the hydraulic composition to be obtained in this step may satisfy the blending ratios of the respective raw materials of the hydraulic composition of the present invention described above.

The ratio of water in the carbonated cement hydrate-containing product in 100 mass% of the total of the water in the carbonated cement hydrate-containing product and the second water is preferably from 0 mass% to 95 mass%, more preferably from 55 mass% to 92 mass%, still more preferably from 58 mass% to 90 mass%, still more preferably from 60 mass% to 80 mass%, particularly preferably from 65 mass% to 70 mass%. When the above-mentioned ratio is 55 mass% or more, the strength of the hardened body of the hydraulic composition can be made larger. When the above-mentioned ratio is 95 mass% or less, the amount of air in a cement composition increases, and hence the fluidity of the hydraulic composition before its hardening is improved.

### [Step (D): Molding Step]

The step (D) is a step of pouring the hydraulic composition that is unhardened, the composition being obtained in the mixing step, into the mold to provide the unhardened molded body.

### [Step (E): Pre-curing Step]

The step (E) is a step of subjecting the unhardened molded body obtained in the molding step to the pre-curing (air curing) under the temperature atmosphere at from 10°C to 40°C (preferably from 15°C to 35°C) for from 0.1 hour to 5 hours.

The time period of the pre-curing is from 0.1 hour to 5 hours, preferably from 0.2 hour to 4 hours, more preferably from 0.5 hour to 3 hours, particularly preferably 0.5 hour or more and less than 1 hour. When the above-mentioned time period is 0.1 hour or more, the strength of the hardened body of the hydraulic composition can be made larger. When the above-mentioned time period is 5 hours or less, the manufacturing efficiency of the hardened body can be improved.

### [Step (F): Steam Curing Step]

The step (F) is a step of subjecting the molded body after the pre-curing to the steam curing to provide the hardened molded body.

The steam curing is preferably performed under a temperature atmosphere at from 40°C to 80°C (more preferably from 45°C to 75°C, particularly preferably from 55°C to 70°C) for 3 hours or more (more preferably from 4 hours to 12 hours, still more preferably from 5 hours to 10 hours, particularly preferably from 6 hours to 9 hours).

The steam curing is performed by: increasing the temperature of the temperature atmosphere after the pre-curing step to a desired maximum temperature; holding the maximum temperature preferably for from 2 hours to 6 hours after the increase; and then decreasing the temperature to normal temperature (e.g., about 20°C).

From the viewpoint of further improving the strength developability and productivity of concrete, a rate of temperature increase when the temperature of the temperature atmosphere is increased to the desired maximum temperature is preferably from 10°C/hour to 30°C/hour, more preferably from 15°C/hour to 25°C/hour.

From the viewpoint of further improving the strength developability and productivity of the concrete, the maximum temperature is preferably from 50°C to 80°C, more preferably from 55°C to 70°C. The time period for which the maximum temperature is held is preferably from 2 hours to 6 hours, more preferably from 3 hours to 5 hours.

A rate of temperature decrease when the maximum temperature is decreased to normal temperature is typically a natural cooling rate (natural cooling). The steam curing may be normal-pressure steam curing to be performed under atmospheric pressure, or may be high-temperature and high-pressure steam curing to be performed with an autoclave under a pressure higher than normal pressure.

### [Step (G): Demolding Step]

The step (G) is a step of removing the hardened molded body after the steam curing from the mold to provide the hardened body of the hydraulic composition.

### Examples

The present invention is more specifically described below by way of Examples. However, the present invention is not limited to Examples.

### [Materials Used]

(1) Cement; ordinary Portland Cement manufactured by TAIHEIYO CEMENT CORPORATION
(2) Fine aggregate; mountain sand
(3) Coarse aggregate; crushed stone
(4) Water; tap water
(5) Cement hydrate; a pulverized product of ready-mixed concrete sludge

### [Examples 1 to 6 and 8 to 11]

The cement (first cement) and the water whose amounts were such that a water-solid content ratio (the mass ratio (first water/the first cement) of the first water to the first cement, or the mass ratio (the total amount of the first water and moisture in a cement hydrate-containing product/a solid content in the cement hydrate-containing product) of the total amount of the first water and the moisture in the cement hydrate-containing product to the solid content in the cement hydrate-containing product: shown as "Water-solid content ratio" in Table 1, the same holds true for the following) became a numerical value shown in Table 1 were mixed to provide a cement hydrate slurry.

Carbonation treatment was performed by blowing a carbon dioxide-containing gas in which the percentage content of carbon dioxide was 99 vol% or more into the resultant cement hydrate slurry. Thus, a carbonated slurry containing a carbonated cement hydrate obtained by sufficiently carbonating the cement was obtained. The carbonation treatment was performed until the pH of the carbonated slurry became 6.5.

The percentage content (mass%) of each of the water and the carbonated cement hydrate in the carbonated slurry was measured with an infrared moisture analyzer (manufactured by Kett Electric Laboratory Co. Ltd.), and the mass ratio (the water in the carbonated slurry/the carbonated cement hydrate: shown as "Slurry water/carbonated cement hydrate" in Table 1) of the water in the carbonated slurry to the carbonated cement hydrate was adjusted to a numerical value shown in Table 1 by removing the water.

The carbonated slurry (slurry containing the carbonated cement hydrate and the first water), the cement (second cement), the water (second water: shown as "Mixed water" in Table 1), the fine aggregate, and the coarse aggregate were mixed in such amounts that unit amounts shown in Table 1 were satisfied. Thus, a hydraulic composition was obtained. In Table 1, the water in the carbonate slurry is shown as "Slurry water."

After the mixing, the hydraulic composition was poured into a mold, and was then subjected to air curing under an environment at 20°C for a pre-curing time shown in Table 2.

Next, the hydraulic composition was subjected to steam curing (see FIG. 1) by: increasing its temperature to 60°C under the condition of a rate of temperature increase of 20°C/hour; maintaining the maximum temperature (60°C) state for 3 hours after the increase; and then decreasing the temperature to 20°C under the condition of a rate of temperature decrease of 4.5°C/hour. After the steam curing, demolding was performed to provide a hardened body of the hydraulic composition.

The compressive strengths of the hardened body at material ages of 1 day and 14 days were measured in conformity with "JIS A 1108:2018 (Method of Test for Compressive Strength of Concrete)."

### [Example 7]

Carbonation treatment was performed by using a cement hydrate slurry obtained by mixing the water and the cement (first cement) satisfying a water-solid content ratio of 3.0. After that, the resultant carbonated slurry was dried by hot-air drying so that its moisture was removed. Thus, a carbonated cement hydrate was obtained.

A hardened body of a hydraulic composition was obtained in the same manner as in Example 1 except that the above-mentioned carbonated cement hydrate was used instead of the carbonated slurry. After that, the compressive strengths of the hardened body at material ages of 1 day and 14 days were measured in the same manner as in Example 1.

### [Examples 12 and 13]

Hardened bodies of hydraulic compositions were each obtained in the same manner as in Example 1 except that a cement hydrate slurry was obtained by using the cement hydrate (pulverized product of the ready-mixed concrete sludge) instead of the cement (first cement). After that, the compressive strengths of each of the hardened bodies at material ages of 1 day and 14 days were measured in the same manner as in Example 1.

### [Comparative Examples 1 to 6]

Hydraulic compositions were each obtained by mixing the cement, the water ("Mixed water" in Table 1), the fine aggregate, and the coarse aggregate in such amounts that unit amounts shown in Table 1 were satisfied. After that, the compressive strengths of each of hardened bodies thereof at material ages of 1 day and 14 days were measured in the same manner as in Example 1 except that the pre-curing time was changed to a time shown in Table 2.

### [Comparative Example 7]

A hardened body of a hydraulic composition was obtained in the same manner as in Example 1 except that: carbonation treatment was performed by using a cement hydrate slurry obtained by mixing the cement (first cement) and the water whose amounts were such that the water-solid content ratio of the cement hydrate slurry became a numerical value shown in Table 1; then the mass ratio of the water to the resultant carbonated cement hydrate in the resultant carbonated slurry was adjusted to a numerical value shown in Table 1; and the pre-curing time was changed to a time shown in Table 2. After that, the compressive strengths of the hardened body at material ages of 1 day and 14 days were measured in the same manner as in Example 1.

### [Comparative Example 8]

A hardened body of a hydraulic composition was obtained in the same manner as in Comparative Example 7 except that the pulverized product of the ready-mixed concrete sludge (cement hydrate) was used instead of the cement (first cement). After that, the compressive strengths of the hardened body at material ages of 1 day and 14 days were measured in the same manner as in Example 1.

With regard to Examples 1 to 7, 12, and 13, and Comparative Examples 7 and 8, with reference to Comparative Example 1, the ratio (shown as "Strength ratio with respect to Comparative Example serving as reference" in Table 2) of the compressive strength of each of Examples 1 to 7, 12, and 13, and Comparative Examples 7 and 8 at each material age to the compressive strength of Comparative Example serving as a reference at each material age was calculated.

The compressive strength ratios of Example 8, Example 9, Example 10, and Example 11 were similarly calculated with reference to Comparative Example 3, Comparative Example 4, Comparative Example 5, and Comparative Example 6, respectively.

The respective results are shown in Table 2.

**Table 1**

| | Water-solid content ratio | Slurry water/carbonated cement hydrate | W/C⁽¹⁾ | s/a⁽²⁾ | C2/C⁽³⁾ | Water⁽⁴⁾ | | Cement | Carbonated cement hydrate | Fine aggregate | Coarse aggregate |
|---|---|---|---|---|---|---|---|---|---|---|---|
| | | | | | | Mixed water | Slurry water | | | | |
| | | | (%) | (%) | (mass%) | Unit amount (kg/m³) | | | | | |
| Example 1 | 1.5 | 1.0 | 43 | 48 | 40 | 13 (7) | 169 (93) | 254 | 169 | 795 | 871 |
| Example 2 | 1.5 | 1.0 | | | 30 | 55 (30) | 127 (70) | 296 | 127 | 795 | 871 |
| Example 3 | 2.0 | 1.2 | | | 25 | 50 (27) | 132 (73) | 312 | 106 | 795 | 871 |
| Example 4 | 2.5 | 1.8 | | | 15 | 71 (39) | 111 (61) | 360 | 63 | 795 | 871 |
| Example 5 | 3.0 | 2.3 | | | 15 | 39 (21) | 143 (79) | 360 | 63 | 795 | 871 |
| Example 6 | 3.5 | 2.8 | | | 10 | 66 (36) | 116 (64) | 381 | 42 | 795 | 871 |
| Example 7 | 3.0 | - | | | 15 | 182 (100) | 0 (0) | 338 | 85 | 795 | 871 |
| Example 8 | 2.5 | 1.8 | 50 | 45 | 20 | 48 (30) | 112 (70) | 256 | 64 | 805 | 994 |
| Example 9 | | | | | | | | | | | |
| Example 10 | | | | | | | | | | | |
| Example 11 | | | | | | | | | | | |
| Example 12 | 3.0 | 1.0 | 43 | 48 | 20 | 97 (53) | 85 (47) | 338 | 85 | 795 | 871 |
| Example 13 | 3.0 | 1.0 | 43 | 48 | 30 | 55 (30) | 127 (70) | 296 | 127 | 795 | 871 |
| Comparative Example 1 | - | - | 43 | 48 | 0 | 182 | 0 | 423 | 0 | 795 | 871 |
| Comparative Example 2 | | | | | | | | | | | |
| Comparative Example 3 | | | 50 | 45 | 0 | 160 | 0 | 320 | 0 | 805 | 994 |
| Comparative Example 4 | | | | | | | | | | | |
| Comparative Example 5 | | | | | | | | | | | |
| Comparative Example 6 | | | | | | | | | | | |
| Comparative Example 7 | 1.5 | 0.7 | 43 | 48 | 55 | 19 (10) | 163 (90) | 190 | 233 | 795 | 871 |
| Comparative Example 8 | 1.5 | 0.7 | 43 | 48 | 55 | 19 (10) | 163 (90) | 190 | 233 | 795 | 871 |

| | | | | | | | | | | | |
|---|---|---|---|---|---|---|---|---|---|---|---|
| (1) W/C: the mass ratio of the water to the total amount of the cement and the carbonated cement hydrate represented in percentage (2) s/a: the volume ratio of the fine aggregate in the total amount of the fine aggregate and the coarse aggregate (3) C2/C: the ratio of the carbonated cement hydrate to 100 mass% of the total of the cement and the carbonated cement hydrate (4) A numerical value in parentheses represents a ratio (mass%) in 100 mass% of the water. | | | | | | | | | | | |

**Table 2**

| | Pre-curing time | Compressive strength | | Compressive strength ratio | Strength ratio with respect to Comparative Example serving as reference⁽¹⁾ | |
|---|---|---|---|---|---|---|
| | | (MPa) | | | | |
| | (h) | 1 Day | 14 Days | (14 Days /1 Day) | 1 Day | 14 Days |
| Example 1 | 2 | 20.5 | 35.5 | 1.73 | 1.37 | 1.40 |
| Example 2 | 2 | 21.0 | 39.8 | 1. 90 | 1.40 | 1.58 |
| Example 3 | 2 | 19.7 | 36.6 | 1.86 | 1.31 | 1.45 |
| Example 4 | 2 | 18.6 | 34.3 | 1.84 | 1.24 | 1.36 |
| Example 5 | 2 | 18.3 | 32.9 | 1.80 | 1.22 | 1.31 |
| Example 6 | 2 | 18.2 | 32.7 | 1.80 | 1.21 | 1.30 |
| Example 7 | 2 | 18.1 | 33.1 | 1.83 | 1.21 | 1.30 |
| Example 8 | 0.5 | 9.9 | 19.9 | 2.01 | 1.08 | 1.21 |
| Example 9 | 1 | 11.8 | 21.9 | 1.86 | 1.24 | 1.30 |
| Example 10 | 2 | 15.4 | 27.8 | 1.81 | 1.21 | 1.29 |
| Example 11 | 4 | 16.8 | 31.1 | 1.85 | 1.11 | 1.21 |
| Example 12 | 2 | 19.3 | 35.1 | 1.82 | 1.29 | 1.39 |
| Example 13 | 2 | 20.7 | 37.7 | 1.82 | 1.38 | 1.50 |
| Comparative Example 1 | 2 | 15.0 | 25.2 | 1. 68 | - | - |
| Comparative Example 2 | 4 | 18.3 | 31.4 | 1.72 | - | - |
| Comparative Example 3 | 0.5 | 9.2 | 16.4 | 1.78 | - | - |
| Comparative Example 4 | 1 | 9.5 | 16.8 | 1.77 | - | - |
| Comparative Example 5 | 2 | 12.7 | 21.6 | 1.70 | - | - |
| Comparative Example 6 | 4 | 15.2 | 25.6 | 1. 68 | - | - |
| Comparative Example 7 | 2 | 14.9 | 23.4 | 1.57 | 0. 99 | 0.93 |
| Comparative Example 8 | 2 | 13.5 | 22.3 | 1.65 | 0.90 | 0.88 |

| | | | | | | |
|---|---|---|---|---|---|---|
| (1) Comparative Example serving as a reference for each of Examples 1 to 7, 12, and 13, and Comparative Examples 7 and 8 is Comparative Example 1, and Comparative Examples serving as references for Examples 8 to 11 are Comparative Examples 3 to 6, respectively. | | | | | | |

It is found from Table 2 that the compressive strengths of Examples 1 to 13 are larger than the compressive strengths of Comparative Examples serving as their references (identical in pre-curing time and W/C thereto), and hence the hydraulic composition of the present invention can make the strength of a hardened body thereof larger.

In particular, it is found that even when the pre-curing time is from 0.5 hour to 1 hour (Examples 8 and 9), the strength of the hardened body can be made larger.

## Claims

1. A hydraulic composition, comprising:
cement;
a carbonated cement hydrate;
aggregate; and
water,
wherein a ratio of the carbonated cement hydrate in 100 mass% of a total of the cement and the carbonated cement hydrate is from 1 mass% to 50 mass%, and
wherein an amount of the water is from 30 parts by mass to 60 parts by mass with respect to 100 parts by mass of the total of the cement and the carbonated cement hydrate.

2. The hydraulic composition according to claim 1, wherein the hydraulic composition comprises fine aggregate and coarse aggregate as the aggregate, and has a sand percentage of from 35% to 65%.

3. A method of manufacturing a hardened body of a hydraulic composition for manufacturing a hardened body of the hydraulic composition of claim 1 or 2, the method comprising:
a cement hydrate slurry preparation step of mixing at least one of first cement or a cement hydrate, and first water to provide a cement hydrate slurry;
a carbonation step of supplying a carbon dioxide gas into the cement hydrate slurry to provide a carbonated cement hydrate-containing product;
a mixing step of mixing the carbonated cement hydrate-containing product, second cement, second water, and the aggregate to provide the hydraulic composition that is unhardened;
a molding step of pouring the hydraulic composition that is unhardened into a mold to provide an unhardened molded body;
a pre-curing step of subjecting the unhardened molded body to pre-curing under a temperature atmosphere at from 10°C to 40°C for from 0.1 hour to 5 hours;
a steam curing step of subjecting the molded body after the pre-curing to steam curing to provide a hardened molded body; and
a demolding step of removing the hardened molded body from the mold to provide the hardened body of the hydraulic composition.

4. The method of manufacturing a hardened body of a hydraulic composition according to claim 3, further comprising, as a step provided between the carbonation step and the mixing step, a moisture adjustment step of adjusting a ratio of moisture in the carbonated cement hydrate-containing product.

5. The method of manufacturing a hardened body of a hydraulic composition according to claim 3, wherein a ratio of water in the carbonated cement hydrate-containing product in 100 mass% of a total of the water in the carbonated cement hydrate-containing product and the second water is from 0 mass% to 95 mass%.

6. The method of manufacturing a hardened body of a hydraulic composition according to claim 3, wherein in the cement hydrate slurry preparation step, a mass ratio (the first water/at least one of the first cement or the cement hydrate) of the first water to at least one of the first cement or the cement hydrate is from 1.0 to 5.0.

7. The method of manufacturing a hardened body of a hydraulic composition according to claim 3, wherein in the steam curing step, the steam curing is performed under a temperature atmosphere at from 40°C to 80°C for 3 hours or more.
